Europäisches Patentamt

European Patent Office

Office européen des brevets

(11) Veröffentlichungsnummer: **0 089 550**

**A2**

## (12) EUROPÄISCHE PATENTANMELDUNG

(21) Anmeldenummer: 83102281.9

(22) Anmeldetag: 09.03.83

(51) Int. Cl.³: **H 01 G 4/12**
**H 01 G 4/30**

(30) Priorität: 19.03.82 DE 3210016
02.03.83 DE 3307231

(43) Veröffentlichungstag der Anmeldung:
28.09.83 Patentblatt 83/39

(84) Benannte Vertragsstaaten:
AT BE CH DE FR GB IT LI LU NL SE

(71) Anmelder: DRALORIC Electronic GmbH
Geheimrat-Rosenthal-Strasse 100 Postfach 1180
D-8672 Selb(DE)

(72) Erfinder: Hoppert, Hans, Dr. Dipl.-Chem.
Friedrichstrasse 14
D-8672 Selb(DE)

(72) Erfinder: Leupold, Gerhard, Dipl.-Phys.
Plössberger Weg 30
D-8672 Selb(DE)

(54) Monolithischer Kondensator und Verfahren zu seiner Herstellung.

(57) Die Erfindung betrifft einen monolithischen Kondensator aus einem Isolierkörper aus dichtgesintertem keramischen Material mit in einem Abstand voneinander und parallel zueinander eingelagerten elektrisch leitenden Schichten (2), die abwechselnd zu einer von zwei gegenüberliegenden Außenflächen des Isolierkörpers verlaufen, wo sie durch Anschlußmetallschichten (3) zu den beiden Belägen des Kondensators zusammengeschaltet sind. Zur Erzielung einer sehr hohen Kapazität pro Volumeneinheit besteht der Isolierkörper aus einer halbleitenden Strontiumtitanatkeramik mit Korngrenzen-Sperrschichten. In Kenntnis der Tatsache, daß Edelmetalle bei einer derartigen Keramik in die Korngrenzen-Sperrschicht eindiffundieren und den Isolations-widerstand reduzierren würden, werden die elektrisch leitenden, aus unedlen Metallen oder Metallegierungen bestehenden Schichten (2) in offenporige, ein Netzwerk bildende Hohlräume (22) injiziert.

FIG.2

## Monolithischer Kondensator und Verfahren zu seiner Herstellung

Die Erfindung betrifft einen monolithischen Kondensator gemäß dem Oberbegriff des Anspruches 1, sowie ein Verfahren zu seiner Herstellung.

Keramikkondensatoren werden seit vielen Jahren angewandt und haben in Folge der großen Dielektrizitätskonstante von keramischen Materialien, beispielsweise von Bariumtitanat, die bislang gebräuchlichen Kondensatoren aus Papier, Glimmer und anderen Materialien ersetzt. Diese Keramikkondensatoren haben eine sehr große Kapazität pro Volumeneinheit, so daß sie bei geringer Größe eine hohe Gesamtkapazität aufweisen.

Ein Kondensator der eingangs genannten Art, sowie ein Verfahren zu seiner Herstellung sind aus der DE-PS 22 18 170 bekannt. Dort kommen als keramische Materialien für den Isolierkörper des monolithischen Kondensators Bariumtitanat, Titandioxid, Bariumstrontiumtitanat u.ä. zur Anwendung. Diese keramischen Materialien besitzen Dielektrizitätskonstanten, die bis in die Größenordnung 12 000 reichen. Ihr Temperaturkoeffizient im Bereich zwischen $-25^{O}C$ und $+85^{O}C$ liegt in der Größenordnung +20% bis -80%.

Weiterhin ist es bekannt, keramische Dielektrika mit hohen effektiven Dielektrizitätskonstanten durch Isolation der Korngrenzen konventioneller Halbleiterkeramiken herzustellen. Strukturen dieser Art sind als "Korngrenzen-Sperrschichtkondensatoren" bekannt. Durch diese Maßnahmen können beispielsweise Bariumtitanathalbleiterkeramiken mit einer effektiven Dielektrizitätskonstante zwischen 50 000 und 70 000 erhalten werden. Die dielektrische Durchschlagfestigkeit solcher Keramiken beträgt 800 V/mm. Der spezifische elektrische Widerstand solcher Keramiken beträgt etwa $2.10^{11}$ Ohm.cm . Der für den praktischen Einsatz solcher KOndensatoren empfindliche Nachteil liegt darin, daß im Temperaturbereich zwischen 30°C und 85°C gegenüber den entsprechenden Werten bei Raumtemperatur Kapazitätsänderungen um ± 40% auftreten. Der Verlustfaktor der bekannten Keramik ist mit etwa 5% bis 10% außerdem vergleichsweise groß, so daß die beschriebene Keramik auch unter diesem Gesichtspunkt nicht sehr vorteilhaft ist.

Strontiumtitanat ist als Hauptkomponente für Kondensatoren an sich bekannt. Es wird in Kombination mit Manganoxid und Siliziumdioxid gemischt, verpreßt und unter Argon gesintert. Der erhaltene Formkörper kann mit oder ohne zusätzliche Manganoxidbeschichtung einer zweiten Sinterung in oxidierender Atmosphäre unterworfen werden. Dadurch wird eine Korngrenzenisolation erzeugt. Die elktrostatische Kapazitätsänderung zwischen 30°C und 85°C eines solchen Produktes beträgt etwa ± 15%. Der Verlustfaktor liegt bei 0,2% bis 5%. Die Strontiumtitanatkeramik ist der entsprechenden Bariumtitanatkeramik also in dieser Beziehung deutlich überlegen. Sie ist der Bariumtitanatkeramik jedoch insofern deutlich unterlegen, als ihre effektive Dielektrizitätskonstante bei einer Durchschlagsspannung von 800 V/mm bis 1000 V/mm den relativ niedrigen Wert von 20 000 bis 35 000 erreicht.

Aus der DE-AS 24 33 661 ist eine Halbleiterkeramik auf Strontiumtitanatbasis mit Zwischenkornisolation mit verbesserten Eigenschaften bekannt, die zu Scheiben gepreßt, an ihren beiden Hauptflächen mit Wismutoxidpulver überzogen und anschließend in oxidierender Atmosphäre gesintert wird. Dabei diffundiert das als Beschichtung aufgetragene Wismutoxid an den Korngrenzen entlang in das Innere des scheibenförmigen Körpers ein. Es entsteht eine Zwischenkornisolation. Durch Aufbringen und Einbrennen von Silberelektroden auf die so hergestellte Keramik werden Scheibenkondensatoren erhalten, deren Kapazität pro Volumeneinheit trotz hoher Dielektrizitätskonstante in Folge der umgekehrt proportional in den Kapazitätswert eingehenden Dicke derartiger Scheibenkondensatoren relativ klein ist.

Aus "The American Cermic Society Inc. :Advances in Ceramics" edited by L.Levinson and D.Höll, Seiten 223 und 224 sind monolithische Korngrenzen-Sperrschichtkondensatoren bekannt, bei denen jedoch als Metallschichten zwischen den Dielektrikumschichten Edelmetalle vorgeschlagen sind. Wie dort weiter ausgeführt wird, reagieren diese Edelmetalle jedoch mit den Korngrenzen-Sperrschichten, d.h. sie diffundieren in diese ein, wodurch der Isolationswiderstand negativ beeinflußt wird.

Deshalb liegt der vorliegenden Erfindung die Aufgabe zugrunde, einen monolithischen Kondensator hoher Kapazität pro Volumeneinheit zur Verfügung zu stellen, der die Vorzüge eines monolithischen Kondensators, bei dem die elektrisch leitenden Schichten aus zwischen das das Dielektrikum bildende Material eingelagerten Schichten aus einem porösen keramischen Material mit einem Netzwerk von miteinander verbundenen Poren bestehen, in denen sich leitendes Material befindet, zu kombinieren mit einer Halbleiterkeramik hoher relativer Dielektrizitätskonstante und verbesserten dielektrischen Eigenschaften.

Diese Aufgabe wird erfindungsgemäß durch die Merkmale des kennzeichnenden Teiles des Anspruches 1 gelöst. Bevorzugte Weiterbildungen der Erfindung sind in den Unteransprüchen gekennzeichnet.

Die mit der Erfindung erzielten Vorteile bestehen insbesonder darin, daß ein monolithischer Kondensator zur Verfügung gestellt wird, der aus einem keramischen Material sehr hoher Dielektrizitätskonstante aus Strontiumtitanat mit Zwischenkornisolation besteht, dessen Korngröße in der Größenordnung um 5 $\mu$m liegt, bei dem die Dicke der Dielektrikumschichten zwischen den offenporigen Netzwerken, die mit elektrisch leitendem Material gefüllt sind, in der Größenordnung von 20 $\mu$m liegt und daß als elektrisch leitendes Material kein in die Korngrenzen-Sperrschichten hineindiffundierendes und den Isolationswiderstand verschlechterndes teures Edelmetall sondern eine billige Legierung beispielsweise aus Blei und Zinn verwendet wird. In vorteilhafter Weise werden zwei an sich bekannte Varianten, nämlich ein bekanntes Herstellungsverfahren für monolithische Kondensatoren mit einem an sich bekannten Material hoher Dielektrizitätskonstante kombiniert, um Kondensatoren hoher Kapazität pro Volumeneinheit sehr preisgünstig in einer Massenfabrikation herstellen zu können.

Ein Ausführungsbeispiel der Erfindung ist in der Zeichnung schematisch dargestellt. Es zeigen:

Fig.1 einen Querschnitt durch einen vergrößert dargestellten monolithischen Kondensator,

Fig.2 einen Ausschnitt aus einem in noch größerem Maßstab dargestellten monolithischen Kondensator, und

Fig.3 eine stark vergrößerte Darstellung einer dielektrischen Folie eines monolithischen Kondensators.

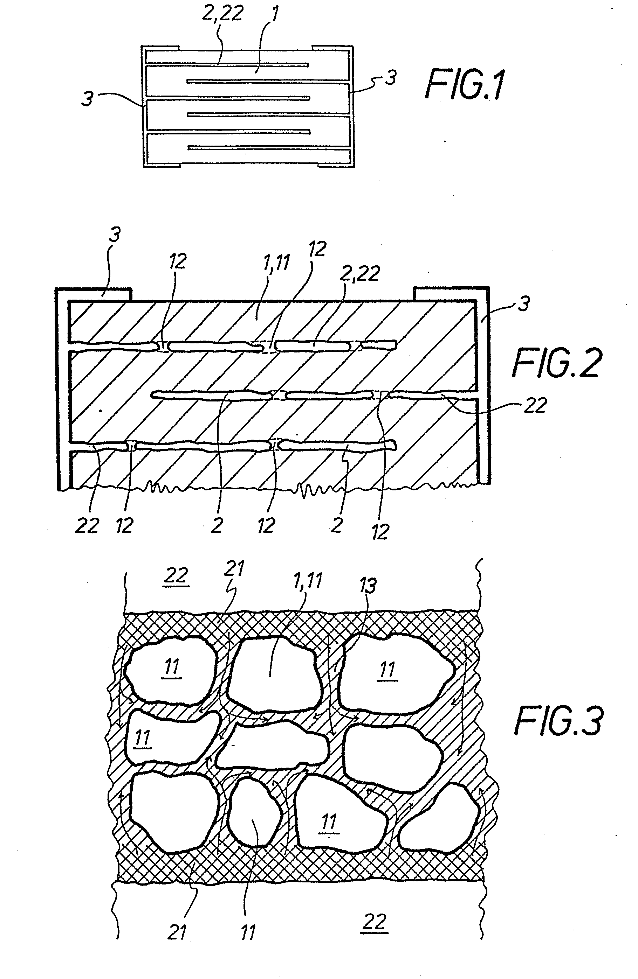

Fig.1 zeigt einen monolithischen Kondensator aus einem Isolierkörper aus einem dichtgesinterten dielektrischen keramischen Material 1 mit in Abstand voneinander und parallel zueinander eingelagerten elektrisch leitenden Schichten 2, die durch in diesen Schichtbereichen vorgesehene Hohlräume 22 des dielektrischen Materials 1 in die das elektrisch leitende Material der Schichten 2 eingelagert ist, gebildet ist, die abwechselnd bis zu einer von zwei gegenüberliegenden Außenflächen des Isolierkörpers verlaufen, wo sie jeweils einen der beiden Beläge des Kondensators bildend durch Anschlußmetallschichten 3 zusammengefaßt sind.

Fig.2 zeigt in einem vergrößerten Ausschnitt dichtgesinterte dielektrische keramische Folien 1, die zur Herstellung der Hohlräume 22 einseitig mit einer Paste bedruckt werden, welche beispielsweise aus Strontiumtitanat in Pulverform besteht, das auf der Basis eines Gewichtsverhältnisses von 1:1 mit einem Bindemittel aus Kiefernöl, Acrylharz und einem Lecitin-Dispergierstoff durchgemischt ist, zu dem zur Erhöhung der Viskosität Äthylcellulose zugesetzt wird. Dabei entspricht die Teilchengröße des Strontiumtitanats derjenigen in den keramischen Folien, d.h. sie liegt in der Größenordnung von 5 $\mu$m. Derartig bedruckte Folien 1 werden in bekannter Weise aufeinandergestapelt, so daß die mit Paste bedruckten Flächen gegeneinander alternierend versetzt sind. Die gestapelten Blöcke werden langsam an Luft erhitzt, um das Bindemittel in den keramischen Schichten 11 auszutreiben und/oder zu zersetzen, und nachfolgend in Luft bei Temperaturen zwischen 1000$^{\circ}$C und 1300$^{\circ}$C gesintert, um die monolithischen Kondensatorkörper zu bilden. Dabei wird auch die Paste zersetzt, bzw. ausgetrieben, so daß zwischen den dichtgesinterten Folien 11 aus Strontiumtitanat die sich an Brücken 12 aus Keramikmaterial abstützenden Hohlräume 22 in Form miteinander verbundener Poren entstehen. Anschließend wird ein Brand in reduzierender Atmosphäre aus 95% bis 98% Stickstoff und 2% bis 5% Wasserstoff durchgeführt, bei dem der monolithische Kondensatorkörper vollständig durchreduziert wird, so daß sich ein Körper mit einer spezifischen Leitfähigkeit von 1 Ohm.cm ergibt. In die Hohlräume 22 wird dann im Vakuum eine Lösung oder Suspension injiziert, die aus Glasbildnern wie Wismutoxid, Blei-Boroxid, Wismut-Blei-Boroxid und aus Oxiden der Metalle Kupfer, Mangan, Eisen, Nickel, Kobalt besteht und unter strenger Einhaltung eines definierten Temperaturprofiles ein oxidierender Brand durchgeführt, bei dem die aus den Glasbildnern und den zuletzt genannten Oxiden aufgebaute Schicht 21 -wie in Fig.3 dargestellt ist- von der Oberfläche jedes Hohlraumes 22 zwischen dem Korn 11 in der dort vorhandenen glasigen Phase 13 entlangdiffundiert und an der Oberfläche jedes n-leitenden Korns 11 eine p-leitende Korngrenzen-Sperrschicht bildet, derart, daß zwischen zwei benachbarten Körnern 11 ein n-p-i-p-n-Übergang entsteht. Die Brenntemperaturen liegen zwischen $650^{O}$C und $1200^{O}$C. Die Brennparameter müssen durch Variation der Temperatur, der Zeit und der Atmosphäre derart eingehalten werden, daß lediglich die Korngrenzen aufoxidiert werden, während das reduzierte Korninnere leitend bleibt. Erfindungsgemäß liegen die Korndurchmesser bei 5/um. Damit werden Dielektrizitätskonstanten von 10 000 bis 12 000, Temperaturabhängigkeiten der Dielektrizitätskonstante zwischen $-25^{O}$C und $+85^{O}$C von kleiner als $\pm$ 15%, Verlustfaktoren von kleiner als 1% und Isolationswiderstände von größer als $10^{10}$ Ohm erreicht. Durch die dünne mögliche Wandstärke der dielektrischen Schichten von 20/um ergibt sich bei einer Dielektrizitätskonstante von 12 000 ein der Kapazität proportionaler Quodient von 12 000:20= 600, während der entsprechende Quodient bei einer bekannten Strontiumtitanat-Halbleiterkeramik mit einer Korngröße von 50/um und einer Schichtdicke von 200/um bei einer Dielektrizitätskonstante von 60 000 bei 60 000:200= 300 liegt. Das bedeutet, daß die Kapazität pro Volumeneinheit bei erfindungsgemäßen Kondensatoren etwa doppelt so groß ist, wie bei bekannten Kondensatoren. Nach Ausbildung der halbleitenden Korngrenzen-Sperrschichten wird in die in Fig.2 dargestellten Hohlräume 22 im Vakuum ein Metall oder eine Metallegierung, beispielsweise eine Blei-Zinn-Legierung injiziert. Die sich bildenden Metallschichten 2 werden paarweise durch Anschlußmetallschichten 3 zu den beiden Belägen des monolithischen Kondensators zusammengefaßt. Die Anwendung unedler Metalle oder Metallegierungen statt der bisher wegen der hohen Sintertemperaturen erforderlichen Edelmetalle wie Platin, Palladium, Gold oder deren Legierungen welche bekanntermaßen in die Korngrenzen-Sperrschichten eindiffundieren und im Extremfall die Isolation der Übergangszonen vernichten, ergibt preisgünstig in der Massenfabrikation herstellbare, eine hohe Kapazität pro Volumeneinheit besitzende monolithische Kondensatoren.

PATENTANSPRÜCHE:

1. Monolithischer Kondensator aus einem Isolierkörper aus einem dichtgesinterten dielektrischen keramischen Material mit in Abstand voneinander und parallel zueinander eingelagerten elektrisch leitenden Schichten, die durch in diesen Schichtbereichen vorgesehene Hohlräume des dielektrischen Materials, in die elektrisch leitendes Material eingelagert ist, gebildet sind, die abwechselnd bis zu einer von zwei gegenüberliegenden Außenflächen des Isolierkörpers verlaufen, wo sie jeweils einen der beiden Beläge des Kondensators bildend durch Anschlüsse elektrisch zusammengefaßt sind und deren dieser Außenfläche gegenüberliegender Rand jeweils von der gegenüberliegenden Außenfläche des Keramikkörpers beabstandet verläuft, wobei die elektrisch leitenden Schichten aus zwischen das das Dielektrikum bildende Material eingelagerten Schichten aus einem porösen keramischen Material mit einem Netzwerk von miteinander verbundenen Poren bestehen, in denen sich das leitende Material befindet,

d a d u r c h   g e k e n n z e i c h n e t ,
daß das keramische Material des Isolierkörpers aus einer an sich bekannten Halbleiterkeramik auf Strontiumtitanatbasis mit Zwischenkornisolation besteht.

2. Kondensator nach Anspruch 1, dadurch gekennzeichnet, daß das mit kleinen Mengen Nioboxid und/oder Tantaloxid und/oder Wismutoxid dotierte Strontiumtitanat außerdem kleine Mengen Mineralisatoren und/oder Zusätze zur Hemmung des Kornwachstums des dotierten Strontiumtitanats enthält, derart, daß die Korngröße des dotierten Strontiumtitanats zwischen 5 µm und 10 µm liegt.

3. Kondensator nach Anspruch 1 oder 2, dadurch gekennzeichnet, daß als Mineralisatoren und/oder Kornwachstumshemmer Oxide der Elemente Zirkon, Vanadium, Chrom, Phosphor, Silizium, Germanium, Aluminium, Niob, Wismut, Molybdän, Wolfram, Eisen, Kupfer, Nickel, einzeln oder kombiniert verwendet werden.

4. Kondensator nach einem der Ansprüche 1 bis 3, dadurch gekennzeichnet, daß das Material des Isolierkörpers und das Material der zwischen das Dielektrikum eingelagerten Schichten dieselbe chemische Zusammensetzung aufweisen.

5. Kondensator nach einem der Ansprüche 1 bis 4, dadurch gekennzeichnet, daß das leitende Material in dem mit Poren verbundenen Netzwerk ein Metall oder eine Metalllegierung ist.

6. Verfahren zur Herstellung eines monolithischen Kondensators nach einem der Ansprüche 1 bis 5, dadurch gekennzeichnet,
daß mehrere dünne selbsttragende Folien aus feinzerteiltem dielektrischem keramischem Material gebildet werden, das mit einem flüchtigen Bindemittel gebunden ist und das beim Brennen bei Sintertemperatur dichtsintert,
daß auf die selbsttragenden Folien Schichten aus einem zweiten keramischen Material aufgebracht werden, das mit einem flüchtigen Bindemittel gebunden ist und beim Brennen ein Netzwerk aus miteinander verbundenen Poren entwickelt, wobei diese Schichten so angeordnet werden, daß sie sich abwechselnd zu einer und der gegenüberliegenden Außenfläche der selbsttragenden Folien erstrecken und von der anderen Außenfläche beabstandet enden,

daß ein aus einem Stapel aus sich abwechselnden
selbsttragenden Folien und Schichten bestehender
Körper gebildet wird,

daß dieser selbsttragende Körper erwärmt und auf
Sintertemperatur gebracht, in einer oxidierenden
Atmosphäre gebrannt wird, so daß ein Netzwerk von miteinander verbundenen Poren entsteht, daß ein Brand in reduzierender Atmosphäre zur vollständigen Reduktion des Isolierkörpers durchgeführt
wird,

daß in das offenporige Netzwerk im Vakuum eine wässrige Lösung injiziert wird, die aus Glasbildnern wie
Wismutoxid, Blei-Boroxid, oder Wismut-Blei-Boroxid und
aus Oxiden der als p-Dotierung wirkenden Übergangsmetalle Kupfer, Mangan, Eisen, Nickel, Kobald, einzeln
oder kombiniert, besteht, und

daß der Isolierkörper unter Einhaltung eines bestimmten Temperaturprofiles in oxidierender Atmosphäre zur
Erzeügung der Zwischenkornisolation nachgebrannt wird.

7. Verfahren nach Anspruch 6, dadurch gekennzeichnet, daß
das elektrisch leitende Material im Vakuum im schmelzflüssigen Zustand in das offenporige Netzwerk injiziert wird.

FIG.1

FIG.2

FIG.3